# EUROPEAN PATENT APPLICATION

(11) **EP 3 091 655 A1**
(43) Date of publication of application: **09.11.2016**
(21) Application number: 14877235.3
(22) Date of filing: 30.12.2014
(51) Int. Cl.: H02S 10/40, H02S 20/32, A01B 49/04

(54) **FARM RAIL SYSTEM**

(30) Priority: 31.12.2013 CN 201310750851
(71) Applicant: Shi, Guoliang, Shanghai 200335 (CN)
(72) Inventor: Shi, Guoliang, Shanghai 200335 (CN)
(74) Representative: V.O.
(86) International application number: PCT/CN2014/095469
(87) International publication number: WO 2015/101274

(57) **Abstract**

A farm rail system comprises a farm rail and a side station power line; the farm rail comprises a group of two reinforced concrete tracks arranged in a farm in parallel, and shapes thereof comprises arched and straight shapes; center line states of two adjacent straight farm rails that are connected end-to-end comprise concentric and non-concentric; the side station power line comprise several shells, bodies that are mutually connected end-to-end, an insulation material layer and a wire, side station power line is arranged along the tracks and electrically connected to a power grid; also comprises is a power receiving module assembly, and the power receiving module assembly comprises a chassis, a fixed electrical connector, several conductive column plates and a sliding power receiving block; the sliding power receiving block is in connects with a surface of wire; the chassis is connected to the shell bodies in a matching and rolling way through power receiving block, the power column plates and the fixed electrical connector form a circuit branch. The farm rail system is a rail system that is insensitive to thermal expansion and contraction, thus ensuring that the shell bodies, an insulation material pipe and the wire can still work reliably in a long term when repeatedly experiencing the thermal expansion and contraction caused by rapid temperature changes of more than 80°C brought by sun exposure and large -current heating of the wire.

## Description

### Technical Field

The invention relates to the farm rail system set in farmland and its purposes.

### Background technology

The existing technology discloses the side station power line of field track, which is used to connect external power network, including shell, power line core set inside the shell. The core comprises the four cores of three-phase four-wire. The side station power line is supported by a pole and set beside the field track. The shell contains a continuous notch. The power line contains a continuously smooth exposed surface; the length of notch and electrical connection interface as well as shell is the same. External electrical connection interface is connected through the notch and the electric of the exposed surface to achieve electricity exchange in mobile.

But the existing technology has not provided a technical solution to the problems brought by the expansion and contraction of wire caused by temperature changes. This kind of expansion and contraction will bring a series of serious problems. In addition, external electrical connection interface has low reliability if it connects with the wire by inserting into the interior of the power line of side station.

### Summary of the invention

The invention aims to provide a farm rail system, which can solve the problems that farm rail system of current technology is sensitive to expansion and contraction.

Technical scheme of the invention to realizes the purpose:
A farm rail system comprises a farm rail and a side station power line; the farm rail comprises a group of two reinforced concrete tracks arranged in a farm in parallel, and shapes thereof comprises arched and straight shapes; center line states of two adjacent straight farm rails that are connected end-to-end comprise concentric and non-concentric; the side station power line comprise several shells, bodies that are mutually connected end-to-end, an insulation material layer and a wire, side station power line is arranged along the tracks and electrically connected to a power grid; also comprises is a power receiving module assembly, and the power receiving module assembly comprises a chassis, a fixed electrical connector, several conductive column plates and a sliding power receiving block; the sliding power receiving block is in connects with a surface of wire; the chassis is connected to the shell bodies in a matching and rolling way through power receiving block, the power column plates and the fixed electrical connector form a circuit branch.

The ends of the wire have plug-in connection interface including wire mortise slot and wire inserting tenon. Wire inserting tenon is inserted into wire tenon slot to realize the concentric series connection of wire and retain the axial clearance as the telescopic expansion space of wire. Wire plug-in connection interface comprises the clearance between two adjacent wires;

Insulating material layer comprises insulating material pipe and the insulating layer made on the surface of wires. The ends of insulating material tube has a plug-in connection interface of insulating material tube which comprises continuous unnotched mortise slot of insulating material tube and inserting tenon of insulating material pipe. Inserting tenon of insulating material pipe is inserted into the mortise slot of insulating material pipe to realize the concentric series connection of the insulating material pipe and retain the axial clearance as the telescopic expansion space of insulating material pipeline.

Wire axis, shell axis and axis of insulating material tube comprise linear and non-linear curve.

Continuous tag lines are marked on the shell or hood, which comprises I-shaped tag and the bar code containing the information about where it is located.

A mobile photovoltaic power generation system is also comprised, including an electric car, rotating base type tracking device of solar radiation angle, electric push-rod regulating device of sunlight elevating angle, photovoltaic cell assembly, automatic plug-in manipulator and photovoltaic controller. Photovoltaic cell assembly connects power grid through automatic plug-in manipulator and side station power line. Electric cars run on the track. Electric push-rod regulating device of sunlight elevating angle comprises the electric push rod and frame assembly. Photovoltaic cell assembly is mounted to the frame assembly. Electric car, rotating base type tracking device of solar radiation angle, push-rod regulating device of sunlight elevating angle, photovoltaic cell assembly, automatic plug-in manipulator connect with the signal of photovoltaic controller. The status of electric car rotating base type tracking device of solar radiation angle, electric push-rod regulating device of sunlight elevating angle, photovoltaic cell assembly, automatic plug-in manipulator and changes according to the change of photovoltaic controller's status.

Agricultural robots on the rail and on the side of rail are also comprised. agricultural robots on rail comprise universal operation platform, middle beam, electric wheel assembly, automatic plug-in manipulator and robot control system. Universal manipulator module mounting base is set on one side of the center frame. Electric wheel assembly comprises electric steering mechanism and electric wheel. Agricultural robots run on rail and obtain power from the power grid through the power line of side station.

Agricultural robots on the side of rail comprise spiral transporter, anti-skid wheel assembly, anti-skid wheel connecting rod, beams, loading and unloading manipulator of manipulator module, automatic plug-in manipulator and robot control system. Universal mounting base of manipulator module are set on both sides of the beam. Beams are equipped with steel rails of sliding block. Spiral transporter comprises spiral conveyor and side plate. Anti-skid wheel assembly comprises electric steering mechanism, anti-skid wheel and height regulator. Agricultural robots on the side of rail obtain electric energy from power grid through the power lines of side station.

Power receiving module assembly consists of arc chassis, fixed electrical connectors, several straight conductive column plates, built-in sliding blocks, camera and photovoltaic cell assembly. Arc chassis wraps shell and cooperates with external surface of shell for scroll connection through electric wheels or wheels, and moves along the axis line direction of the shell.

Power receiving module assembly comprises flat chassis, fixed electrical connectors, several arc conductive column plates, several arc powered sliding blocks and wire temperature sensors. Flat chassis cooperates with the tank-type channel at the inner bottom of the shell for scroll connection through electric wheels or wheels, and moves along the axis line direction of the shell.

Power receiving module assembly comprises flat chassis, fixed electrical connectors, several bending conductive column plates and several flat powered sliding blocks. Flat powered sliding blocks are respectively positioned on the top and the bottom of the wire or on both sides of the wire. Flat chassis cooperates with the tank-type channel at the inner bottom of the shell for scroll connection through electric wheels or wheels, and moves along the axis line direction of the shell.

The axial length of wire plug-in type connection interface is defined as the axial length from the axial clearance midpoint of two adjacent wires that coordinate with each other to the sliding power receiving blockstretching to both sides twice in the length.

Low resistance quantization can also be described as the average voltage drop of both sides of the wire connection interface is lower than 1 volt when direct current whose current intensity is 3 amps / cm² passes. When two adjacent power lines of side station are in the standard construction state, including 25 + 0.5 C, the insertion force or pulling force of shell, insulating material pipes or single wire are not more than 3 kg.

When adopting aluminum wire or aluminum profile wire, current technology can be used to form a layer of wear-resistant surface layer on the surface of the aluminum wire, including the wear-resistant layer formed on the surface of aluminum material by anodic oxidation and the wear-resistant surface formed by electroplating. The wire and sliding power receiving blockof the power lines of side station have an average of 2000 times of sliding frictions a year at a speed of about 0.2 m / s. As a comparison reference: a kind of electric hand drill, whose brush structure comprises graphite electrode and copper commutating pole. Its revolving speed is 3000 rpm / min, namely 3000 times of sliding friction per minute at a speed of 3.8 m / s. It can still be used normally even it has been used for five years and any wear of copper electrode and graphite electrode can hardly be noticed.

**Beneficial effect:** For farm rail system, shell plug-in connection interface set along the axis direction at the shell end of the power line of side station comprises reducer. Plug-in connection interface of insulating material pipe set at the end of insulating material pipe along the axis line direction comprises the mortise slot and inserting tenon. Low-resistance and low-drag plug-in connection interface set at the end of the wire along the axis line direction comprises mortise slot and inserting tenon, jack, plunger, quirks of concentric circles which cooperate mutually. Axial clearance shall be retained at the connection interface, that is, the telescopic expansion space of various lines absorbs shells, insulating material pipes and the size change of the expansion and contraction of wire, and allows the slip connection between the place outside the fixed combination and the farmland, making the end retract freely, and insulating material pipe move freely relative to the place of shell or wire outside the fixed combination, thus ensuring that the shell bodies, an insulation material pipe and the wire can still work reliably in a long term when repeatedly experiencing the thermal expansion and contraction caused by rapid temperature changes of more than 80°C brought by sun exposure and large -current heating of the wire.

Make adjacent wires keep tenoned and have an auxiliary soft wire for electrical connection, which can increase the reliability of the connection and reduce the resistance of the whole wire.

Setting continuous tag line for the power line of side station is helpful to determine the spatial location of track-based agricultural robots and their job objects and use non-tube irrigation for planting.

Movable PV power system of this invention can provide a large amount of power without affecting the yield and quality of crops. Rail-based agricultural robots can provide unmanned agricultural facilities driven by electric power, and continue to upgrade products by changing different manipulator modules and applications. The general operation platform of rail based agricultural robots can be equipped with grain thresher and straw strapper. Spiral conveying device of agricultural robots on the side of rail with the general operation platform of the agricultural robot on rail achieves seamless connection of grain. Transfer cars can complete the logistics from field to material storage site. The agricultural robot installed with anti-skid wheels on the side of rail can provide large horsepower traction, and its working width can reach 20 meters above.

Make the shaft axis of shell comprise linear and non-linear curves, the shaft axis of the wire and the insulating material parallel or substantially parallel to the axis line of shell, which can adapt to the complex terrain.

The flat powered sliding blocks located above and below the wire as well as on the two sides of wires are relatively insensitive to the bending of wire.

### Description of drawings

Detailed description shall be given by the figures.

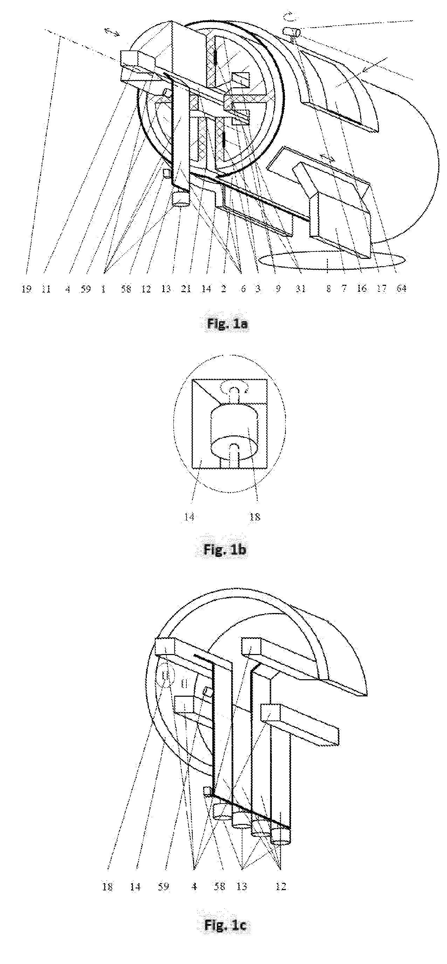

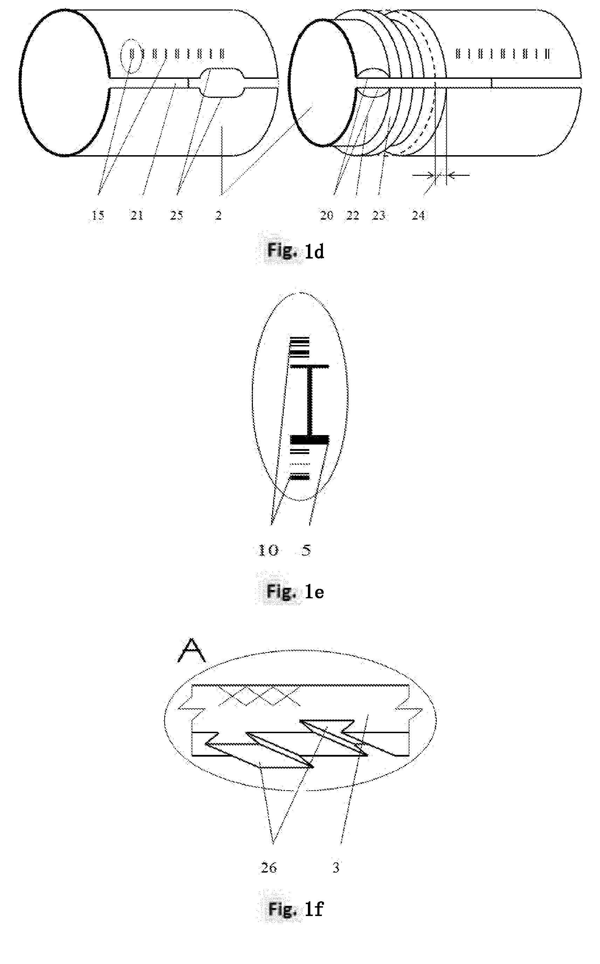

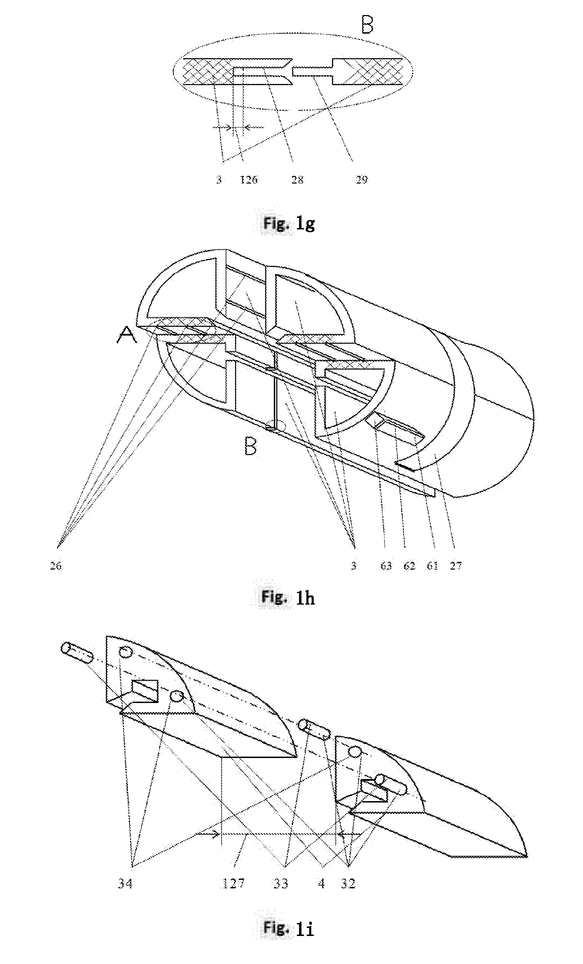

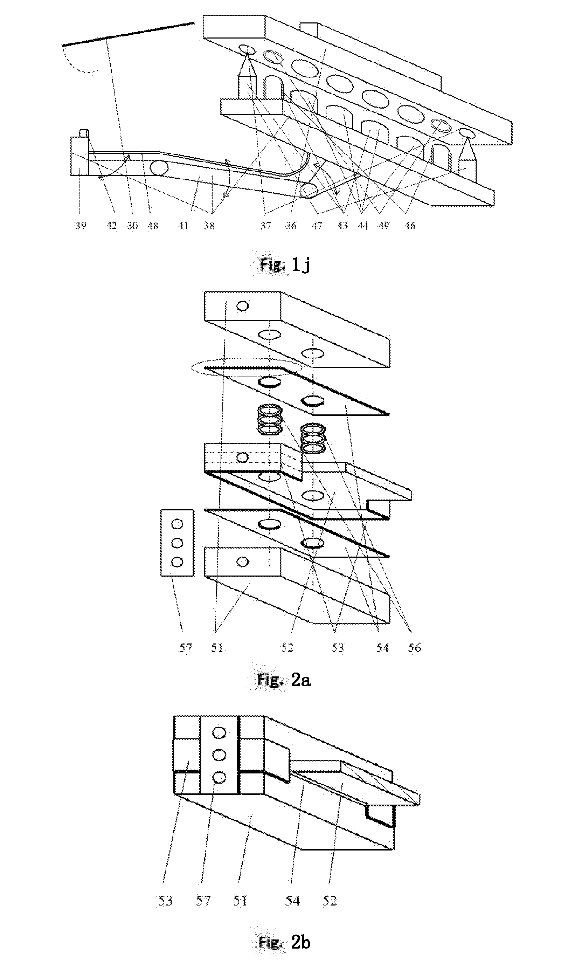

Figure 1a is the structure diagram of a section of the power line of side station with external power receiving module assembly. Figure 1b and 1c is the local amplification of electric wheels. Figure 1c is the structure diagram of an external power receiving module assembly. Figure 1d is the structure diagram of two shells using reducer section and head-to-tail connection. Figure 1e is a local amplification of a marked line. Figure If is the local amplification of a dovetail groove of the insulation material tube. Figure 1g is the local amplification of continuous non-notched mortises lot and inserting tenon of a insulating material tube at seams. Section view is a top-down process along the surface. Figure 1h is the structure diagram of integration of insulating material pipes through the sliding fit of dovetail groove structure. Figure 1i is the structure diagram on how two sections of aluminum profile wires to realize low-resistance and low-drag plug-in connection. Figure 1j is the structure diagram on how automatic plug-in manipulator connects to fixed electrical connectors.
Figure 2a and 2b are exploded view and outline drawing of a built-in sliding power receiving block respectively. Fig. 2c is the local amplification of the elastic sheet in Fig. 2a.
Figure 3 is the structure diagram on how the wire whose two cross sections are positive quadrant to realize low-resistance and low-drag plug-in connection.
Figures 4a and 4b are the outline drawing and exploded view of a section of the side station power line with built-in power receiving module assembly.
Figures 5a and 5b are the structure diagram and exploded view of a movable PV power system respectively.
Figures 6a and 6b are the structure diagram and exploded view of an agricultural robot on rail respectively.
Figure 7 is the structure diagram of local amplification of electric push rod in Figure 5.
Figure 8 is the local amplification of water pipes and tracks in Figure 6a.
Figures 9a and 9b are the structure diagram and exploded view of an agricultural robot on the side of track.
Figure 10 is the schematic diagram of the cooperative work between agricultural robots on rail and agricultural robots on the side of track.
Figure 11 is the N-sectional structure diagram of flat sliding power receiving block's power receiving module assembly located above and below the wire.
Figure 12 is the N-sectional structure diagram of flat sliding power receiving block's power receiving module assembly located on both sides of the wire.

In the Figure, 1. side station power line; 2. shell; 3. insulating material pipe; 4. wire; 5. I-shaped mark; 6. power receiving module assembly; 7. poles; 8. agricultural land; 9. open cavity; 10. bar codes; 11. built-in power receiving sliding block; 12. straight conducting column plate; 13. fixed electrical connectors; 14. arc chassis; 15. mark line; 16. camera; 17. photovoltaic cells; 18. electric wheel; 19. shaft axis of shell; 20. blocks; 21. full notch; 22. reduction segment; 23. line expansion space; 24. clamp hole; 26. structure of dovetail groove; 27. hoop with a mouth 28. tenon slot; 29. tenon; 30. power grid 31. fixed wire bonding point; 32. wire plug-in connection interface; 33. plunger; 34. jack; 35. flat sliding powered block; 36. junction box; 37. plug-oriented port; 38. automatic plug manipulator; 39. plug control system; 40. bending conductive column plate; 41. multi-joint arm; 42. plug-in camera; 43. external electrical connectors; 44. power plug; 45. electric screw; 46. plug guide; 47. cable; 48. screw holes; 51. Powered brush block; 52. conductive motherboard; 53. edges; 54. elastic sheet; 56. spring; 57. soft tabs; 58. powered computer control system; 59. wire temperature sensor; 61. bond material; 61. adhesive material; 62. combination point; 63. cushion block; 64. one - dimensional moving pair mechanism; 66. insulating layer; 67. fan-shaped cavity; 68. arc; 69. arc powered sliding block; 71. arc conductive column plate; 72. flat chassis; 73. slotted channel; 74. concentric deep grooves; 75. movable photovoltaic power generation system; 76. electric car; 77. rotating base type tracking device of solar radiation angle; 78. electric sliding regulating device of sunlight elevating angle; 79. photovoltaic cell assembly; 80. rail pile; 81. PV controller; 82. track; 83. auxiliary soft wire; 84. electric wheel; 86. wheel column; 87. chassis; 88. plane rotation pair mechanism; 89. base; 91. electric driving device; 92 electric push rod; 93. assembly frame; 94. rotary of auxiliary mechanism; 96. agricultural robot on the track; 97. general operating platform; 99. electric wheel assembly; 101. robot control system; 102. mounting base; 103. electric steering mechanism; 104. module of reaping manipulator; 106. water pipes; 107. electric water-taking valve assembly; 108. agricultural robot; 109. screw conveyor means; 111. anti-skid wheel assembly; 112. anti-skid wheel connecting pod; 113. beam; 114. handling manipulator; 116. slider rail; 117. screw conveyor; 118. side panels; 119. anti-skid wheels; 121. height adjuster; 122. rotary tiller; 123. cable; 124. lightering car.

### Concrete implementation method

A farm rail system comprises a farm rail and a side station power line; the farm rail comprises a group of two reinforced concrete tracks arranged in a farm in parallel, and shapes thereof comprises arched and straight shapes; center line states of two adjacent straight farm rails that are connected end-to-end comprise concentric and non-concentric; the side station power line comprise several shells, bodies that are mutually connected end-to-end, an insulation material layer and a wire, side station power line is arranged along the tracks and electrically connected to a power grid; also comprises is a power receiving module assembly, and the power receiving module assembly comprises a chassis, a fixed electrical connector, several conductive column plates and a sliding power receiving block; the sliding power receiving block is in connects with a surface of wire; the chassis is connected to the shell bodies in a matching and rolling way through power receiving block, the power column plates and the fixed electrical connector form a circuit branch.

The end of the wire contains wire plug-in connection interface including wire mortise solt and inserting tenon. Wire inserting tenon is inserted into wire mortise slot to realize the concentric series connection of wire and retain the axial clearance as the telescopic expansion space of wire. Wire plug-in connection interface comprises the clearance between two adjacent wires; Insulating material layer comprises insulating material pipe and the insulating layer made on the surface of wires. The ends of insulating material tube have a plug-in connection interface of insulating material tube which comprises continuous unnotched mortise slot of insulating material tube and inserting tenon of insulating material tube. Tenon of insulating material pipe is inserted into the tenon slot of insulating material pipe to realize the concentric series connection of the insulating material pipe and retain the axial clearance as the telescopic expansion space of insulating material pipeline. Wire axis line, shell axis line and the axis line of insulating material tube comprise linear and non-linear curves.

Continuous tag lines are marked on the shell or hood, which comprises I - shaped tag and the bar code containing the information about where it is located.

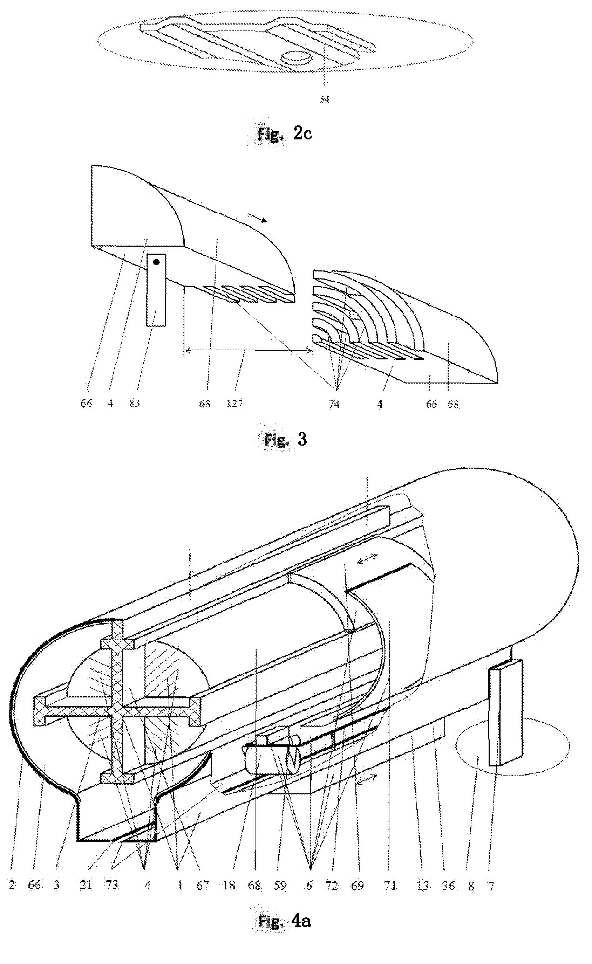

Example 1, as shown in Figure 1 and Figure 2, rail system comprises rail pile 80, rail 82, pole 7, power line 1 of side station; where power line 1 of side station comprises shell 2, insulating material tube 3, wire 4, power receiving module assembly 6, power line 1 of the side station is fixed on the farmland through pole 7 and connects to the grid 30.

Wire 4 has open cavity 9 which cooperates and connects to built-in power sliding receiving block 11 as well as has an electrical connection with fixed electrical connector 13 through the straight conductive column plate 12.

Power receiving module assembly 6 comprises an arc chassis 14, fixed electrical connector 13, several blocks of straight conductive column plate 12, several blocks of built-in sliding power receiving block11, camera 16 and photovoltaic cell 17. Camera 16 is used to build machine vision. Photovoltaic cell 17 is used to provide power for power receiving module assembly 6. Arc chassis 14 is a cylindrical object with an angle of the circumference of about 270 degree. The set of arc chassis is set outside shell 2, and coordinates with rolling connection through the outer surface of electric wheel 18 and the shell 2 and can move along the direction of the axis line 19 of the shell.

Shell 2 has a continuous notch 21. One end of shell 2 has reducer section 22, which can coordinate concentrically with shell 2 that has no diameter shrinkage, use discontinuous apron 23 for sealed connection and reserve a certain axial clearance, namely line telescopic expansion space 24. Line telescopic expansion space 24 absorbs shell 2's expansion and contraction. A protruding fixture block 20 is made on reducer section 22. Fixture block 20 coordinates with clamp holes 25 on shell 2 to ensure the coherence 21 of continuous notch, which will not affect reducer section 22 with respect to the thermal expansion and contraction movement of adjacent shell 2. Reducer section 22 can be welded on shell 2 after being made separately.

A continuous tag line 15 is made on shell 2. Tag line 15 comprises I-shaped mark 5 and bar code 10. The information contained in Bar code 10 corresponds to its location. The information of bar code 10 can be read and converted to digital signals by connecting with the camera's signal.

The method of mark line making is that using laser marking equipment to mark on the surface of the stainless steel shell 2.

Insulating material tube 2 is arranged in shell 3. Each insulating material tube 3 is connected and integrated as a whole by the sliding coordination of dovetail groove 26. Clamp 27 with a mouth is used to bundle many insulating material tubes 3 which are mutually arranged in parallel along the direction of the axis line 19 of the shell. From the local amplification B of figure 1d, it can be seen that: Insulating material tube 3 is equipped with continuous unnotched mortise slot 28 and insert tenon 29 with a sliding fit. Insert tenon 29 can be inserted into mortise slot 28 to realize the concentric series connection of insulation material tube 3 and reserve the line expansion space 126 of insulating material absorbing expansion and contraction. Reserving line telescopic expansion space 126 of insulating material is that inserting tenon 29 is not directly inserted to the end when tenons are connected. In general, the size of various line expansion space 24, line telescopic expansion space 126 of insulation material, line telescopic expansion space 127 of wires is order of magnitude in mm, which is obtained after calculation and specifically inquiring relevant data.

A plurality of insulating material tube 3 is bundled together. Line telescopic expansion space 126 of different insulating materials is along the direction of the axis line 19 of the shell and should not be overlapped. In this way, even without mortise slot 28 and inserting tenon 29, it can ensure that there is at least one layer of insulating material tube 3 with enough withstand voltage between two parallel wires 4 in any one place.

The ends of four wires 4 placed in insulating material pipe 3 have low -resistance and low-drag wire plug-in connection interface 32 along with the parallel axis line direction of shell. Figure 1i gives a low-resistance and low-drag wire plug-in connection interface 32 with independent plunger connecting structure, including plunger 33 and jack 34 of wire 4. Make the diameter size of Jack 34 consistent and the diameter of the plunger 33 large in and small in half. The half with large diameter is closely fit with jack 34, which can reduce resistance's contract with the atmosphere. The half with small diameter has sliding fit with jack 34, which achieves the series connection of wire 4 and keeps the line telescopic expansion space 127 of wire. The line telescopic expansion space 127 of wire absorbs the line expansion of wire 4. Can limit the axial clearance of adjacent wires connected in series, namely, line telescopic expansion space 127 of wires. Integral wire 4 with plunger 33 can also be used.

Straight conductive column plate 12 stretches into continuous notch 21 and connects to built-in sliding power receiving block 11 set in open cavity 9. Built-in sliding power receiving block 11 cooperates with sliding low resistance connection.

Fixed electrical connector 13 is located on the outside of continuous notch 21 of shell 2. Junction box 36 is used for protection. Junction box 36 also has a plug - in guide 37 to help the location of automatic plug - in manipulator 38 and fixed electrical connector 13 when inserting.

For the automatic connection of a fixed electrical connector 13, use an automatic plug-in manipulator 38, including plug - in control system 39, a multi joint arm 41, a plug - in camera 42, and an external electrical connector 43. External electrical connector 43 comprises a number of power plugs 44, two electric screws 46, two plug - in guides 47 and a piece of cable 48. Under the monitoring of plug - in camera 42 and the command of plug - in control system 39, multi-joint arm 41 will send external electrical connector 43 to the bottom of fixed electrical connector 13 and lift it, to realize the connection merge with fixed electrical connector 13 under the constraints of plug - in guide 47, and then two electric screws 46 stretches into the screw 49 on junction box 36 and lock them.

Built-in sliding power receiving block 11 comprises two pieces of electric brush block 51, two pieces of elastic piece 54 and a conductive motherboard 52. Conductive motherboard 52 with edge 53 is used to restrain electric brush block 51. Electric brush block 51 can connect to straight conductive column plate 12 through one or more springs 56. Powered brush block 51 can specifically use copper- based powered brush block, graphite electric brush block or the powered brush block made by combining copper and graphite. Soft lug plate 57 is used to connect powered brush block 51 with straight conductive column plate 12. When spring 56 is under pressure, powered brush block 51 will fit with the inner surface of open cavity 9.

The structure of built-in sliding power receiving block 11 makes itself have a certain accuracy error and keep its low resistance connection with wire 4 when the wire surface of axial connection clearance moves.

Power receiving module assembly 6 also comprises a powered computer control system 58, which connects with the wire temperature sensor 59 located in shell 2, the camera 16 outside shell 2, photovoltaic cells 17 and the electric wheel 18 matched with arc chassis 14. The status of wire temperature sensor 59, camera 16 and photovoltaic cells 17 changes according to the change of the status of powered computer control system.

The invention also comprises the fixed combination point 62 set between shell 2 and the insulating material pipe 3. Fixed point 62 is used to keep the necessary connection between shell 2 and the insulating material tube 3. Fixed combination 62 is that shell 2 and the insulating material tube 3 are positioned based on degree angle of circumference, and heel block 63 is fixed by binding materials If fixed combination point 62 is set in the middle of each side of the power line of side station, the size change value caused by the line telescopic expansion of the relevant parts will be divided into two equal parts, that is, for fixed combination point, the size change will reduce by hall.

The fixed combination point 31 of wire between insulating material tube 3 and wire 4 will be formed by the bonding of adhesive material, or welded connection, fastening connection.

The invention also comprises an auxiliary flexible wire 83. Adjacent wires 4 in front-back series connection are mutually tenoned and conduct electrical connection through the auxiliary flexible wire 83. The resistance of the auxiliary flexible wire 83 to the external force can be neglected. Auxiliary flexible wire 83 can ensure the minimum electrical connection of two adjacent sequential wires 4. Auxiliary flexible wire can also used for the brush of electric hand drill.

The connection between shell 2 and wire pole 7 comprises the sliding connection of the fixed connection and one-dimensional deputy moving mechanism 64 moving along the direction of the axis line 19 of the shell. Sliding connection is to avoid harmful tension or thrust to the whole structure due to expansion and contraction.

Wires 4 and all the built-in power receiving sliding blocks in open cavity 9 are mutually insulated by insulating material tube 3, which can provide more transmission lines.

For example, when the temperature reaches 40 degrees, Aluminum wire 4 is fixed with glue at the midpoint. Relative change scope of two endpoints of adjacent aluminum wire 4 is 1.56 mm (40*6000/2 (0.000024-0.000011) ). When the length of tenon of Aluminum wire 4 exceeds 40 mm, the increased resistance of low resistance and low drag plug-in connection interface will not be great.

When the temperature of Aluminum wire 4 reaches over 80 °C, 100 °C due to the increase of the current temperature, relative change scope of two endpoints of above adjacent aluminum wire 4 can reach 3.12 mm. However, because the axial clearance between the adjacent connection interface of two adjacent aluminum wires can absorb dimensional changes, the power line 1of side station can still work properly.

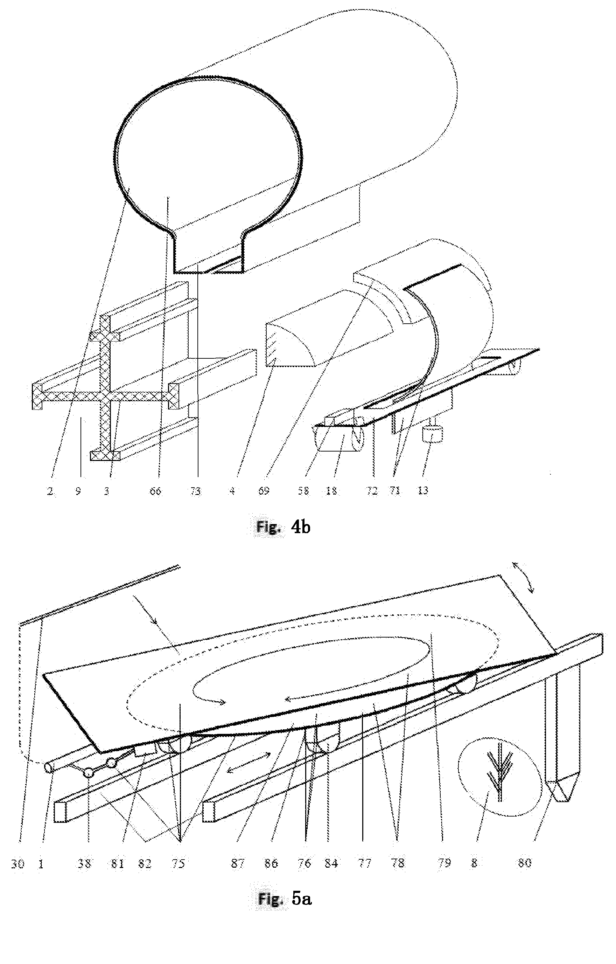

Example 2, as shown in Figure 3 and Figure 4, rail system comprises a rail pile 80, rail 82, telegraph pole 7 and power line 1 of the side station. And power line 1 of the side station comprises shell 2, a cross-shaped tube 3 of insulating material, wire 4 and power receiving module assembly 6 and is connected to the land 8 through telegraph pole 7. Shell 2 has continuous notch. An insulating layer 66 is set on the inner surface of shell. Insulating material tube 3 is in connection with shell 2 on the top. Aluminum wire 4 is placed in four fan-shaped cavity 67 of insulating material tube 3. Wire 4 has a cambered surface 68 with a 60 to 80 degrees angle circumference. Arc sliding power receiving block69 consistent with the arc shape 68 of wire 4 is use for sliding connection with wire 4. Wire 4 is coated with insulating material except for the surface connected to the sliding connection of arc-shaped sliding power receiving block69. Use the arc conductive column plate 71 made of elastic material. Arc conductive column plate 71 has an electrical connection with fixed electrical connector 13.

Power receiving module assembly 6 comprises flat chassis 72, fixed electrical connector 13, a plurality of arc-shaped conductive column plate 71, a plurality of arc powered sliding blocks 69 and wire temperature sensor 59. Flat chassis 72 coordinates with rolling connection through the groove shape channel of electric wheel 18 and the shell 2 and can move along the direction of axis line 19 of shell 19.

For the connection interface of insulating material tube 3, see the content of continuous unnotched mortise slot 28 and inserting tenon 9 with sliding fit in example 1.

In Figure 3, the cross section of wire 4 is positive quadrant. On the end face of two adjacent wires 4, use lathe to process more than one concentric circular groove 74 which cooperates in slide and joggle joint respectively, and cut off a part of both outermost layers, making both form an line telescopic expansion space 126 of insulating material when connecting.

Fixed electrical connector 13 is located on the outside of continuous notches 21, and use the junction box 36 to protect.

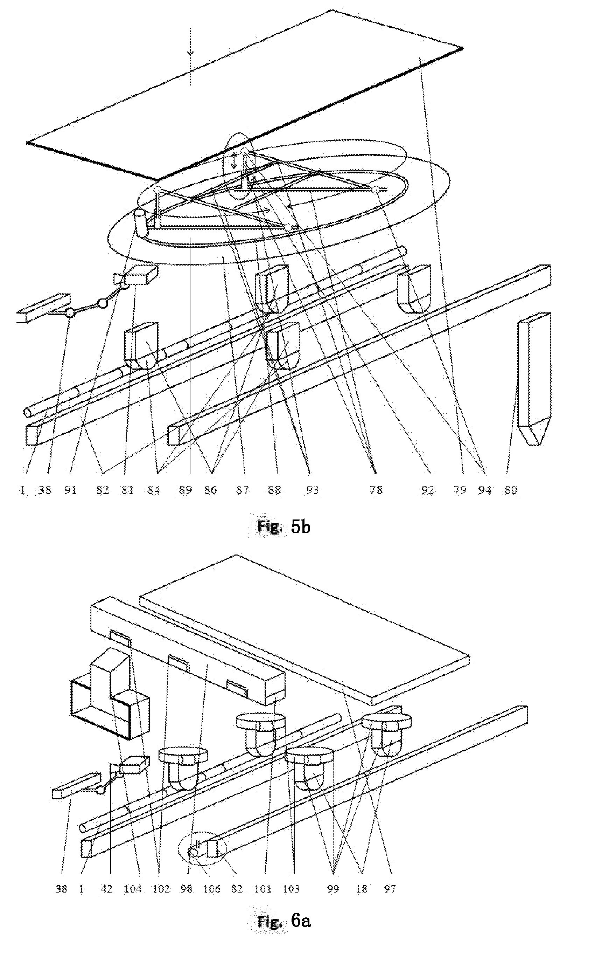

Example 3, as shown in figure 5, the invention also comprises a movable photovoltaic power generation system 75, which comprises electric car 76, rotating base type tracking device of solar radiation angle 77; electric push-rod regulating device of sunlight elevating angle 78, photovoltaic cell assembly 79, automatic plug-in manipulator 38, PV controller 81. Photovoltaic cell assembly 79 connects to power grid 30 by automatic plug-in manipulator 38 and power line 1 of side station. Electric car 76 transfers gravity to the ground by rail pile 80 and rail 82 and can run on rail 82. Tracks 82 are set in farmland 8. Electric car 76 comprises electric wheels 84, wheel column 86 and chassis 87. Rotating base type tracking device of solar radiation angle 77 comprises a base 89 connecting with chassis 87 by plane rotation pair mechanism 88 and an electric driving device 91 with a transmission connection with base 89. Electric sliding regulating device of sunlight elevating angle 78 comprises an electric push rod 92 and assembly frame 93. The bottom of assembly frame 93 connects with base 89 by rotating auxiliary mechanism 94 and with the top of electric push rod 92 by rotating auxiliary mechanism 94. The bottom of electric push rod 92 connects with base 89 by rotating auxiliary mechanism 94. PV cell assembly 79 is mounted on assembly frame 93. Electric car 76, rotating base type tracking device of solar radiation angle 77, electric sliding regulating device of sunlight elevating angle 78, photovoltaic cell assembly 79 and automatic plug-in manipulator 38 connect with the signal of PV controller 81. The status of electric car 76, rotating base type tracking device of solar radiation angle 77, electric sliding regulating device of sunlight elevating angle 78, photovoltaic cell assembly 79 and automatic plug manipulator 38 changes in accordance with the changes of the status of PV controller.

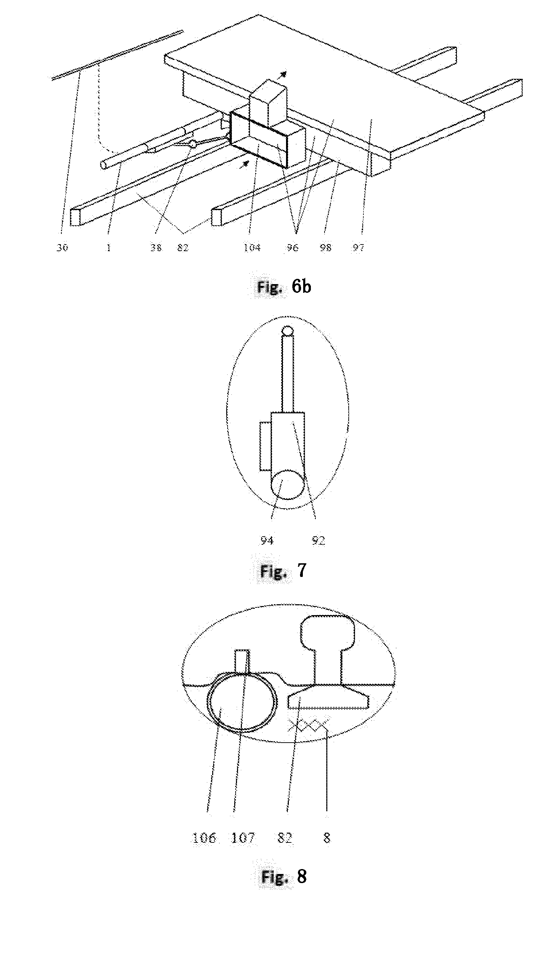

Example 4, as shown in Figure 6,7,8, the invention also comprises agricultural robot on the rail 96, which comprises general operating platform 97, center frame 98, electric wheel assembly 99, automatic plug manipulator 38, robot control system 101. Mounting base 102 should be installed on one side of center frame 98 for manipulator module. Electric wheel assembly 99 comprises electric steering mechanism 103 and electric wheels 18. Electric steering mechanism 103 is convenient for the agricultural robot on the rail to use between different agricultural lands 8 when migrating and is equipped with module of reaping manipulator 104.

Different agricultural manipulators can be replaced by mounting base 102 of general manipulator module to complete different jobs. Agricultural robot 96 on the rail runs on the rail 82 and obtains electric energy power from power grid 30. Center frame transfers gravity to land 8 through electric wheel assembly 99 and rail 82. Water pipes 106 which are arranged in parallel with the rail 82 are buried in the land 8 on one side of rail 82. Electric water-taking valve assembly 107 is set on water pipe 106. General operating platform 97 can be installed later in case of need, including grain threshing and straw bundle.

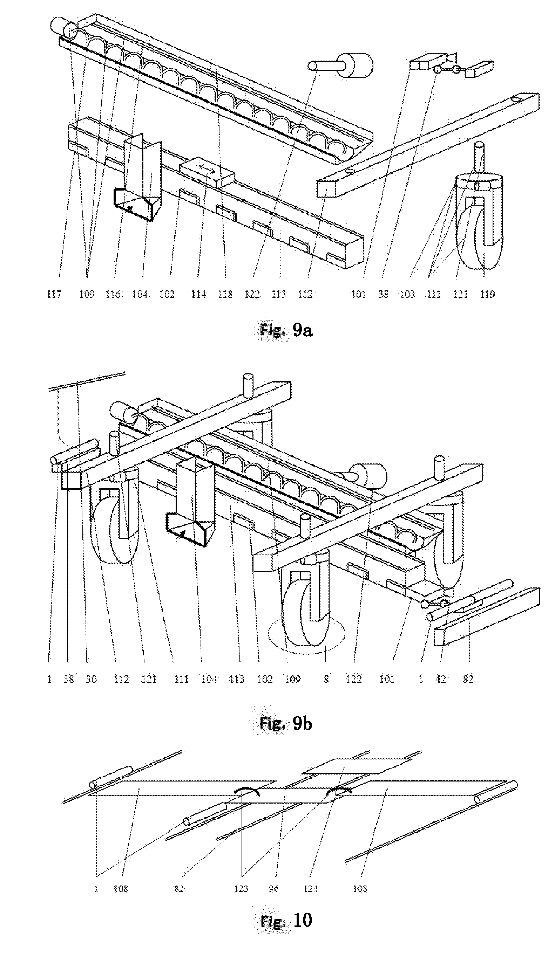

Example 5, as shown in Figure 9, the invention also comprises agricultural robot 108 on the side of rail side, which comprises screw conveyor means 109, anti-skid wheel assembly 111, anti-skid wheel connecting pod 112, beam 113, handling manipulator 114, automatic plug-in manipulator 38 and robot control system 101. Mounting base 102 of universal manipulator module is set on one side of beam 113 for the installation of agricultural manipulator, including module of reaping manipulator 104. Slider rail 116 is also installed on beam 113 to run handling manipulator 114. Handling manipulator 114 is responsible for loading and unloading agricultural manipulators, including reaping manipulator module 104. Screw conveyor means 109 comprises screw conveyor 117 and side panels 118. Anti-skid wheel assembly 111 comprises electric steering mechanism 103, anti-skid wheels 119 and height adjuster 121. Height adjuster 121 is used to adjust the height of the beam 113. Agricultural robot 108 on the side of rail runs on the rail 82 and obtains electric energy from power grid 30 through the power line 1 of the side station. Electric steering mechanism 103 is convenient for the agricultural robot on rail side to use between different agricultural lands 8 when migrating and is equipped with module of reaping manipulator 104 and rotary tiller 122. Rotary tiller 122 is responsible for cultivating farmland.

The agricultural robot on the side of rail 108 is heavy. Its length can reach 40 meters. It directly transfers gravity to the land 8 only through its Anti-skid wheel assembly 111, which can be used to provide enough traction for farmland work, avoiding the faults of the small friction of rail 82. It gains spatial location information through the plug-in cameras on automatic plug-in electric manipulator and the tag line on the power line visual connection.

Example 6, as shown in Figure 10, agricultural robot on rail 96 and agricultural robot on the side of rail 108 are connected through electric cable 123, and they are connected to the power grid through side station power line 1to work together. It uses the lightering car 124 to transfer materials. Transfer car 124 runs on rail 124, which also connects power grid through the power line 1 of side station.

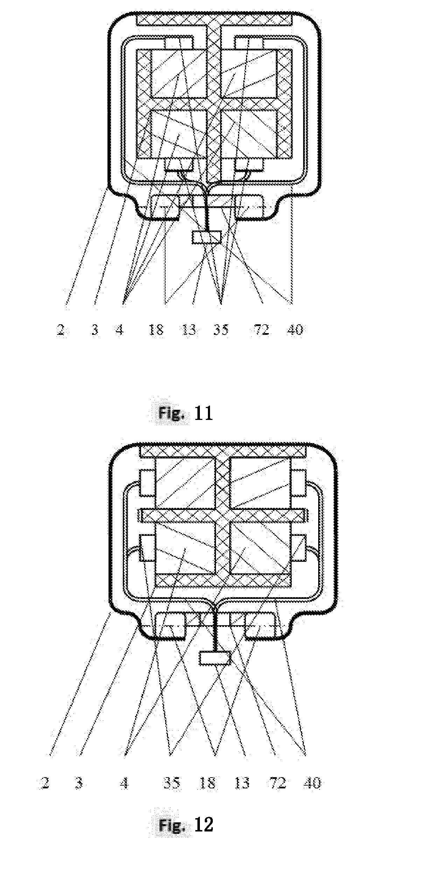

Example 7, as shown in Figure 11, flat sliding power receiving block 3 and 5, respectively lie at the top and the bottom of the wire 4, and electrically connect with the bending conductive column plate 40. Bending conductive column plate 40 connects with flat chassis 72 and goes through to electrically connect with fixed electrical connector 13.

It can be shown from Figure 11, if the wire 4 continuously and non-straightly varies in height, it does not affect the low-resistance connection between flat sliding power receiving block 35 and the wire 4. Also, if the shell 2 changes continuously and non-straightly in height, nor does it affect the connection between electric wheel 18 in rolling together with wire 4.

Example 8, as shown in Figure 12, flat sliding power receiving block 3, 5 respectively lies at both sides of wire 4 and electrically connects with bending conductive column plate 40. Bending conductive column plate 40 connects with platform chassis 72 and goes through to electrically connect with fixed electrical connector 13.

It can be shown from Figure 12, if the wire 4 is not straight with a continuous curved surface, it does not affect the low-resistance connection between flat sliding power receiving block35 and the wire 4. Also, if the shell 2 is not straight with a continuous curved surface, nor does it affect the connection between electric wheel set 18 in rolling together with wire 4.

Shell 2 in example 7 and 8 can contain the bending section. Its manufacturing method is to bend the straight shell 2 with mandrel bending equipment.

Insulation pipe 3 in example 7 and 8 can also contain the bending section. Its manufacturing method comprises the production by a special mould.

Wire 4 in example 7 and 8 can also contain the bending section. Its manufacturing method is to bend the straight wire 2 with mandrel bending equipment.

Through the power receiving module assembly, the power line of side station in this invention can be electrically connected to agricultural robot on the rail or removable connection of the photovoltaic power system, and accept the control of them. Power receiving module assembly moves in accordance with the instructions. Electricity enters the grid from the removable photovoltaic power system to the power line of side station through power receiving module assembly; or electric energy of the grid directly or indirectly transfers to agricultural robot on the rail through the side station power line through power receiving module assembly.

### Industrial application

In conclusion, from the detailed description of structural characteristics, technical content and operation & application, we can clearly see the design features of this invention lie on the rail system of the invention which is insensitive to the expansion and contraction, For farm rail systemof this invention which is insensitive to expansion and contraction, shell plug-in connection interface set along the axis direction at the shell end of the power line of side station comprises reducer. Plug-in connection interface of insulating material pipe set at the end of insulating material pipe along the axis line direction comprises the mortise slot and inserting tenon. Low-resistance and low-drag plug-in connection interface set at the end of the wire along the axis line direction comprises mortise slot and inserting tenon, jack, plunger, quirks of concentric circles which cooperate mutually. Axial clearance shall be retained at the connection interface, that is, the telescopic expansion space of various lines absorbs shells, insulating material pipes and the size change of the expansion and contraction of wire, and allows the slip connection between the place outside the fixed combination and the farmland, making the end retract freely, and insulating material pipe move freely relative to the place of shell or wire outside the fixed combination, thus ensuring that the shell bodies, an insulation material pipe and the wire can still work reliably in a long term when repeatedly experiencing the thermal expansion and contraction caused by rapid temperature changes of more than 80°C brought by sun exposure and large -current heating of the wire.

## Claims

1. Farm rail system, its features is that it comprises a farm rail and a side station power line; the farm rail comprises a group of two reinforced concrete tracks arranged in a farm in parallel, and shapes thereof comprises arched and straight shapes; center line states of two adjacent straight farm rails that are connected end-to-end comprise concentric and non-concentric; the side station power line comprise several shells, bodies that are mutually connected end-to-end, an insulation material layer and a wire, side station power line is arranged along the tracks and electrically connected to a power grid; also comprises is a power receiving module assembly, and the power receiving module assembly comprises a chassis, a fixed electrical connector, several conductive column plates and a sliding power receiving block; the sliding power receiving block is in connects with a surface of wire; the chassis is connected to the shell bodies in a matching and rolling way through power receiving block, the power column plates and the fixed electrical connector form a circuit branch.

2. As the farm rail system recited in claim 1, its features are that the ends of the wire have plug-in connection interface including wire mortise slot and wire inserting tenon; Wire inserting tenon is inserted into wire tenon slot to realize the concentric series connection of wire and retain the axial clearance as the telescopic expansion space of wire; Wire plug-in connection interface comprises the clearance between two adjacent wires; Insulating material layer comprises insulating material pipe and the insulating layer made on the surface of wires; The ends of insulating material tube has a plug-in connection interface of insulating material tube which comprises continuous unnotched mortise slot of insulating material tube and inserting tenon of insulating material pipe; Inserting tenon of insulating material pipe is inserted into the mortise slot of insulating material pipe to realize the concentric series connection of the insulating material pipe and retain the axial clearance as the telescopic expansion space of insulating material pipeline; Wire axis, shell axis and axis of insulating material tube comprise linear and non-linear curve.

3. As the farm rail system recited in claim 1, its features are that continuous tag lines are marked on the shell or hood, which comprises I-shaped tag and the bar code containing the information about where it is located.

4. As the farm rail system recited in claim 1, its features are that a mobile photovoltaic power generation system is also comprised, including an electric car, rotating base type tracking device of solar radiation angle, electric push-rod regulating device of sunlight elevating angle, photovoltaic cell assembly, automatic plug-in manipulator and photovoltaic controller; Photovoltaic cell assembly connects power grid through automatic plug-in manipulator and the power line of side station; Electric cars run on the track; Electric push-rod regulating device of sunlight elevating angle comprises the electric push rod and frame assembly; Photovoltaic cell assembly is mounted to the frame assembly; Electric car, rotating base type tracking device of solar radiation angle, push-rod regulating device of sunlight elevating angle, photovoltaic cell assembly, automatic plug-in manipulator connect with the signal of photovoltaic controller; The status of electric car rotating base type tracking device of solar radiation angle, electric push-rod regulating device of sunlight elevating angle, photovoltaic cell assembly, automatic plug-in manipulator and changes according to the change of photovoltaic controller's status.

5. As the farm rail system recited in claim 1, its feature is that it also comprises agricultural robots on the rail and on the side of rail; agricultural robots on rail comprise universal operation platform, middle beam, electric wheel assembly, automatic plug-in manipulator and robot control system; universal manipulator module mounting base is set on one side of the center frame; electric wheel assembly comprises electric steering mechanism and electric wheel; agricultural robots run on rail and obtain power from the power grid through the power line of side station; agricultural robots on the side of rail comprise spiral transporter, anti-skid wheel assembly, anti-skid wheel connecting rod, beams, loading and unloading manipulator of manipulator module, automatic plug-in manipulator and robot control system; universal mounting base of manipulator module are set on both sides of the beam; beams are equipped with steel rails of sliding block; Spiral transporter comprises spiral conveyor and side plate; anti-skid wheel assembly comprises electric steering mechanism, anti-skid wheel and height regulator; agricultural robots on the side of rail obtain electric energy from power grid through the power lines of side station.

6. As the farm rail system recited in claim 1- 5, its feature is that power receiving module assembly consists of arc chassis, fixed electrical connectors, several straight conductive column plates, built-in sliding power receiving blocks, camera and photovoltaic cell assembly; Arc chassis wraps shell and cooperates with external surface of shell for scroll connection through electric wheel set or wheel set, and moves along the axis line direction of the shell.

7. As the farm rail system recited in any item of the claim 1- 5, its feature is that powered receiving module assembly consists of arc chassis, fixed electrical connectors, several straight conductive column plates, built-in sliding blocks, camera and photovoltaic cell assembly; arc chassis wraps shell and cooperates with external surface of shell for scroll connection through electric wheel set or wheel seet, and moves along the axis line direction of the shell.

8. As the farm rail system recited in any item of the claim 1- 5, its feature is that power receiving module assembly comprises flat chassis, fixed electrical connectors, several arc conductive column plates, several arc powered sliding blocks and wire temperature sensors; Flat chassis cooperates with the tank-type channel at the inner bottom of the shell for scroll connection through electric wheels or wheels, and moves along the axis line direction of the shell.
